(19) Europäisches Patentamt / European Patent Office / Office européen des brevets

(11) **EP 3 654 057 B1**

(12) **FASCICULE DE BREVET EUROPEEN**

(45) Date de publication et mention de la délivrance du brevet:
**01.12.2021 Bulletin 2021/48**

(51) Int Cl.:
***G01S 13/42*** *(2006.01)*

(21) Numéro de dépôt: **19206898.9**

(22) Date de dépôt: **04.11.2019**

(54) **PROCÉDÉ D'OPTIMISATION DU POINTAGE D'UNE ANTENNE D'UN SYSTÈME RADAR AÉROPORTÉ**

OPTIMIERUNGSVERFAHREN ZUM AUSRICHTEN EINER ANTENNE EINES FLUGZEUG-RADARSYSTEMS

METHOD FOR OPTIMISING THE POINTING OF AN ANTENNA OF AN AIRBORNE RADAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2018 FR 1871451**

(43) Date de publication de la demande:
**20.05.2020 Bulletin 2020/21**

(73) Titulaire: **Thales**
**92400 Courbevoie (FR)**

(72) Inventeur: **COTTRON, Rodolphe**
**33700 MERIGNAC (FR)**

(74) Mandataire: **Marks & Clerk France**
**Immeuble "Visium"**
**22, avenue Aristide Briand**
**94117 Arcueil Cedex (FR)**

(56) Documents cités:
**FR-A1- 2 900 736    US-A- 5 488 381**

**Description**

L'invention relève du domaine des radars aéroportés de surveillance du sol ou de la mer et plus particulièrement des radars aéroportés à des altitudes de plusieurs dizaines de milliers de pieds.

Dans les applications opérationnelles, pour différentes raisons (discrétion, distance de protection, horizon électromagnétique, utilisation de drones MALE ou HALE voire de ballons, ...), la surveillance s'opère à des altitudes de plus en plus élevées. Ainsi, les altitudes opérationnelles qui étaient auparavant généralement inférieures à 10000 pieds, peuvent maintenant atteindre plusieurs dizaines de milliers de pieds.

Malheureusement, la fauchée diminue avec l'altitude du radar (et donc avec le site antenne), ce qui implique que la zone de sol surveillée diminue également. Alors qu'à basse altitude la fauchée couvre naturellement presque l'intégralité du sol jusqu'à l'horizon radar, à haute altitude, il faut utiliser plusieurs pointages antenne afin de couvrir l'ensemble de la zone d'intérêt.

La difficulté est alors de positionner correctement chacun de ces pointages. En effet, il faut obtenir une couverture continue de la zone d'intérêt (c'est-à-dire sans trou de détection entre les différents pointages) tout en limitant le chevauchement entre ces pointages afin de ne pas multiplier inutilement le nombre de pointages.

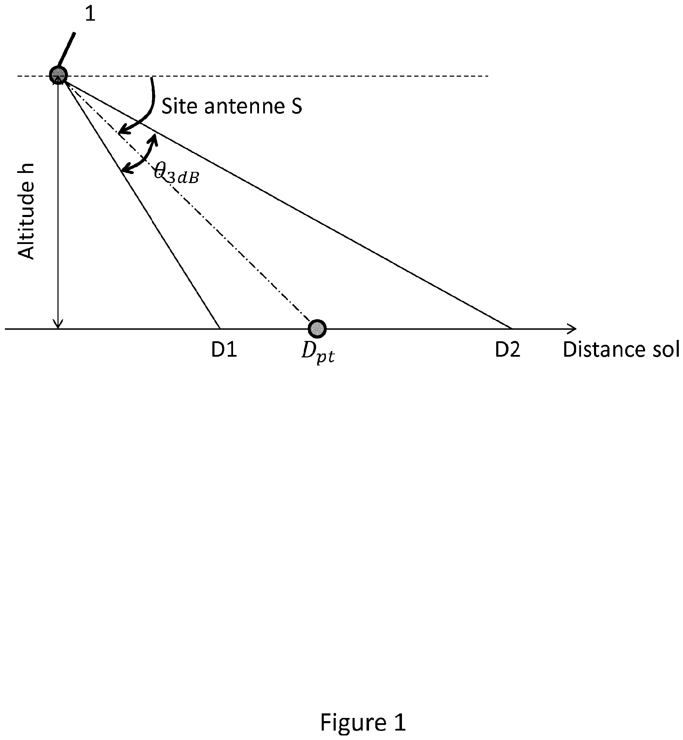

La figure 1 décrit la configuration géométrique d'une surveillance aéroportée, où le système radar 1 est situé à une altitude h par rapport au sol. L'antenne radar, dont l'ouverture angulaire en élévation vaut $\theta_{3dB}$, vise en son centre un point du sol situé à une distance $D_{pt}$. L'empreinte géométrique de l'antenne au sol définit une zone [D1, D2] appelée fauchée. L'approche la plus directe pour optimiser les pointages antenne consiste à utiliser l'ouverture $\theta_{3dB}$ de l'antenne pour calculer différentes valeurs de D1 et D2 telles que la juxtaposition des différentes sous-fauchées [D1, D2] couvre la zone d'intérêt à couvrir.

Malheureusement, cette approche purement géométrique ne suffit pas dans les applications envisagées. A grande distance, par exemple, cette approche ne prend pas en compte la limitation de la portée du radar, et la fauchée estimée par la méthode précédente serait plus importante que la fauchée réellement exploitable. A l'inverse, à courte distance, le critère géométrique utilise une largeur d'ouverture de faisceau à 3dB, alors qu'une ouverture à 10dB pourrait peut-être convenir, ce qui sous-estime dans ce cas la largeur de fauchée. Globalement, l'estimation de la fauchée réellement exploitable serait faussée, et elle ne permettrait pas d'assurer la continuité de la détection entre les sous-fauchées.

Il est connu de l'art antérieur d'effectuer plusieurs pointages afin de couvrir l'ensemble de la zone d'intérêt. Le document US06841083 par exemple, divulgue une méthode de calcul des pointages des différents centres de faisceau qui utilise la largeur de faisceau ce qui revient à utiliser la méthode géométrique de la figure 1 et qui ne permet pas une continuité entre les différents pointages. Le document US 5488381A décrit une méthode d'optimisation de pointé en élévation d'une antenne d'un système radar aéroporté qui est elle aussi purement géométrique. Dans le document FR3027408 le calcul de la position des différentes fauchées n'est pas explicité et il est indiqué que les sous-fauchées sont non jointives, ce qui ne permet pas d'assurer la continuité de la détection.

Il est connu du document FR 2900736A1 d'ajuster le site d'une antenne lors du balayage d'une zone par le faisceau radar en tenant compte de l'altitude du porteur et de la fauchée de la bande d'image souhaitée par l'opérateur pour la zone considérée. Cependant, ce document ne précise pas comment réaliser cet ajustement.

L'invention vise à pallier le problème précité c'est-à-dire optimiser le pointage d'une antenne afin de couvrir au mieux une surface d'intérêt, sans discontinuité de la capacité de détection, et en prenant également en compte le type de cible recherché. A cet effet, l'invention a pour objet un procédé tel que décrit par les revendications.

L'invention a également pour objet un système mettant en œuvre ce procédé.

RESUME

Ainsi, un objet de l'invention est un procédé d'optimisation du pointage en élévation d'une antenne d'un système radar aéroporté à une altitude h comprenant une antenne et des moyens de traitement et de calcul, le procédé comprenant :

**a.** la sélection d'une zone d'intérêt

**b.** le calcul des pertes atmosphériques $L_{ref}$ à une altitude de référence $h_{ref}$ à la portée de référence $D_{ref}$ et le calcul d'un critère de référence $K_{ref}$ = -40 $\log_{10}$ ($D_{ref}$);

**c.** pour chaque distance de pointage possible en élévation de l'antenne $D_{pt}$ de la zone d'intérêt, le calcul du site antenne S permettant de viser la distance $D_{pt}$ par le centre de l'antenne;

**d.** pour chaque distance D du domaine d'intérêt, le calcul de l'angle $\theta$ sous lequel l'antenne observe le point du sol à la distance D et le calcul d'un critère ;

$$K(D) = G_e(\theta) + G_r(\theta) - 40 \log_{10} D + L_{ref}(h_{ref}, D_{ref}) - L_{atmo}(h, D)$$

Où $G_e(\theta)$, $G_r(\theta)$ sont respectivement les gains de l'antenne normalisés en émission et en réception, et avec $L_{atmo}$ les pertes atmosphériques à l'altitude h et à la distance D;

**e.** le calcul de l'ensemble des distances D qui, pour cette distance de pointage $D_{pt}$ vérifient la relation $K(D) > K_{ref}$ de manière à obtenir le début et la fin de la sous-fauchée réellement exploitable par le système radar ; et

**f.** calculer les sous-fauchés réellement exploitables à juxtaposer pour couvrir la totalité de la zone d'intérêt sans discontinuités.

Selon des modes particuliers d'un tel procédé :

- on répète les étapes b) à f) avec différentes valeurs de surface équivalentes radar $SER_{ref}$, ayant préalablement recalculé les nouvelles portées $D_{ref}$ correspondant à ces nouvelles $SER_{ref}$.
- on répète les étapes b) à f) avec différentes formes d'onde radar.
- on répète les étapes b) à f) pour différents diagrammes d'émission et de réception de l'antenne.

Un autre objet de l'invention est un système radar aéroporté à une altitude h pour la mise en œuvre d'un procédé d'optimisation du pointage d'une antenne à balayage en azimut et en élévation dudit système radar, ledit système radar étant caractérisé en ce qu'il comprend des moyens de traitements configurés pour calculer une portée de référence $D_{ref}$ pour une surface équivalente radar $SER_{ref}$ donnée, calculer des pertes atmosphériques $L_{ref}$ à une altitude de référence $h_{ref}$ à la distance $D_{ref}$ et calculer un critère de référence $K_{ref} = -40 \log_{10}(D_{ref})$ puis pour chaque distance de pointage possible de l'antenne $D_{pt}$ de la zone d'intérêt, calculer le site antenne $S$ permettant de viser la distance $D_{pt}$ par le centre de l'antenne puis pour chaque distance D du domaine d'intérêt calculer l'angle $\theta$ sous lequel l'antenne observe le point du sol à la distance D et de calculer un critère

$$K(D) = G_e(\theta) + G_r(\theta) - 40 \log_{10} D + L_{ref}(h_{ref}, D_{ref}) - L_{atmo}(h, D)$$

où $G_e(\theta)$, $G_r(\theta)$ sont respectivement les gains de l'antenne normalisés en émission et en réception, et avec $L_{atmo}$ les pertes atmosphériques à l'altitude h et à la distance D; puis calculer l'ensemble des distances $D$ qui, pour cette distance de pointage $D_{pt}$ vérifient la relation $K(D) > K_{ref}$ de manière à obtenir le début et la fin de la sous-fauchée réellement exploitable par le système radar et enfin répéter ces étapes de calculs pour toutes les distances de pointage $D_{pt}$ de la zone d'intérêt puis calculer les sous-fauchées réellement exploitables à juxtaposer pour couvrir la totalité de la zone d'intérêt sans discontinuités, avec un minimum de recouvrement et avec un nombre minimal de pointage d'antenne en élévation.

Selon des modes de réalisation particuliers d'un tel système :

- les formes d'onde radar émises par l'antenne sont configurables.
- les diagrammes d'émission et de réception sont configurables.

BREVE DESCRIPTION DES DESSINS

D'autres caractéristiques, détails et avantages de l'invention ressortiront à la lecture de la description faite en référence aux dessins annexés donnés à titre d'exemple et qui représentent, respectivement :

- La figure 1, une configuration géométrique d'une surveillance aéroportée.
- La figure 2, la géométrie et les différentes variables utilisées par un procédé d'optimisation du pointage d'une antenne de l'invention.
- Les figures 3A et 3B, les résultats d'un algorithme de calcul des sous-fauchées exploitables en réception de l'invention pour deux altitudes différentes.
- Les figures 4A et 4B, les résultats d'un algorithme de calcul des sous-fauchées exploitables en réception de l'invention pour deux types de cibles différents.
- La figure 5, le résultat d'un procédé d'optimisation de l'invention utilisant plusieurs formes d'ondes.

Les références aux figures, quand elles sont identiques, correspondent aux mêmes éléments.

Dans les figures, sauf contre-indication, les éléments ne sont pas à l'échelle.

DESCRIPTION DETAILLE DE L'INVENTION

L'invention a pour objet un procédé d'optimisation des pointages antenne en élévation permettant de maitriser :

- la position des sous-fauchées réellement exploitables en terme de détection,
- ainsi que la continuité de la détection entre les sous-fauchées, et un système mettant en œuvre ce procédé.

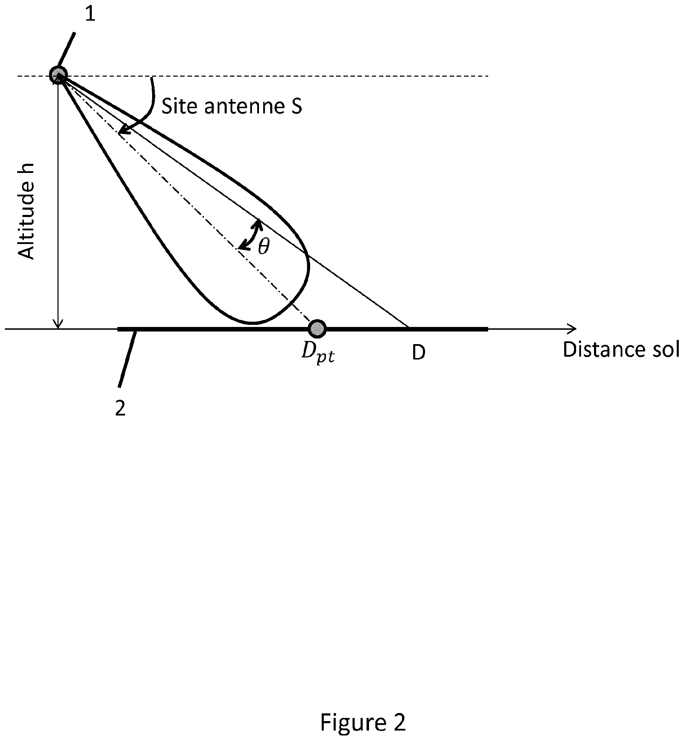

La figure 2 illustre l'aspect géométrique de l'invention et les paramètres utilisés dans un procédé d'optimisation de l'invention. Dans ce mode de réalisation, un système radar 1 est aéroporté à une altitude h. Ce système peut être porté par un avion, hélicoptère, un aéronef ou tout autre type de porteurs aériens. Ce système radar comprend une antenne à balayage en azimut et en élévation et des moyens de traitements. Dans le mode de réalisation de la figure 2, le balayage en azimut est mécanique sur 360° et le balayage en élévation est mécanique. Dans un autre mode de réalisation, le balayage en azimut est inférieur à 360° et le balayage en élévation peut être à dépointage électronique.

Afin de déterminer le nombre minimum de pointages en élévation à réaliser afin de couvrir une zone d'intérêt donnée tout en assurant la continuité de la capacité de détection, on utilise 3 paramètres radars simples et connus de l'homme du métier :

- la portée de référence, $D_{ref}$, pour une cible donnée de $SER = SER_{ref}$. Cette portée de référence correspond à une probabilité de détection $P_d$ et un taux de fausse alarme fixés et lorsque la cible est vue par le gain maximal de l'antenne;
- l'altitude de référence $alt_{ref}$, à laquelle on obtient cette portée de référence et qui permet de calculer les pertes atmosphériques $L_{ref}$ à la distance $D_{ref}$ ; et
- l'expression des diagrammes de l'antenne en élévation en émission et en réception, normalisés à 0dB pour le gain maximum. On note $Ge(\theta)$ et $Ge(\theta)$ les gains d'antenne normalisés en émission et en réception respectivement.

En utilisant l'équation radar, on peut alors écrire :

$$\frac{S}{B} = \frac{Pc.Ge_{max}.Gr_{max}.Ge(\theta).Gr(\theta).\lambda^2.SER.G_{trt}}{((4\pi)^3.D^4.L.kTBF.L_{atmo})} = A.\frac{Ge(\theta).Gr(\theta)}{(D^4.L_{atmo})}$$

Avec :

- Pc, la puissance crête du radar,
- $Ge_{max}$, le gain maximum de l'antenne en émission,
- $Gr_{max}$, le gain maximum de l'antenne en réception,
- $\lambda$, la longueur d'onde du radar,
- SER, la SER de la cible,
- $G_{trt}$, le gain global du traitement radar,
- D, la distance radiale de l'écho radar,
- L, l'ensemble des pertes hormis les pertes atmosphériques,
- k, la constante de Boltzmann,
- T, la température du radar,
- B, la bande de réception du radar,
- F, le facteur de bruit du radar,
- A, une constante qui rassemble une grande partie des paramètres précédents et dont les valeurs numériques n'ont pas à être connues comme on le verra plus tard,
- $L_{atmo}$, les pertes atmosphériques.

En général, les pertes atmosphériques dépendent de l'altitude à laquelle le système radar 1 est aéroporté, de l'altitude de la cible et de la distance radar-cible. Cependant, dans le mode de réalisation de la figure 2, on considère que l'altitude de la cible est négligeable et on a donc :

$$L_{atmo} = L_{atmo}(h, D).$$

Comme définie précédemment, la sensibilité du mode permet de détecter une cible de $SER = SER_{ref}$ vue par le gain maximal de l'antenne à une distance $D_{ref}$, donc :

$$\left(\frac{S}{B}\right)_{ref} = A . \frac{1}{D_{ref}^4 . Lref}$$

Pour s'affranchir des paramètres internes du radar, on peut alors définir la constante de référence:

$$K_{ref} = \frac{1}{D_{ref}^4}$$

Ainsi, pour D et θ quelconques, on peut calculer :

$$K = \frac{Ge(\theta) . Gr(\theta)}{D^4} . \frac{L_{ref}}{L_{atmo}}$$

Si $K > K_{ref}$, alors la cible est détectée pour le couple (D,θ).

Grâce à ce critère, il est possible de calculer pour chaque distance du sol visé par le centre de l'antenne $D_{pointage}$ (et les sites antenne correspondant), le début et la fin de la fauchée réellement exploitable. En réalisant ce calcul sur tout le domaine d'intérêt, il est donc possible de calculer le nombre minimal de pointage d'antenne permettant de couvrir la totalité du domaine d'intérêt sans discontinuités et avec un recouvrement minimal.

Aussi, selon un mode de réalisation de l'invention, le procédé d'optimisation du pointage de l'antenne du système radar 1 pour l'étude d'un domaine d'intérêt 2 utilise un algorithme dont les variables sont représentées dans la figure 2 et le pseudocode est détaillé ci-après, selon les étapes suivantes :

    1. Soit l'altitude h à laquelle le système radar 1 est aéroporté ;

    2. Calcul des pertes atmosphériques $L_{ref}$ à une altitude de référence $h_{ref}$ à la portée de référence $D_{ref}$.

    3. Calcul de la constante de référence $K_{ref} = -40 * \log_{10}(D_{ref})$;

    4. Pour chaque distance de pointage possible de l'antenne, $D_{pt}$ ;

        a. Calcul du site antenne, S, permettant de viser la distance de pointage par le centre de l'antenne ;

        b. Pour chaque distance D du domaine d'intérêt 2 ;

            i. Calcul de l'angle θ sous lequel l'antenne voit le point du sol à la distance D ;

            ii. Calcul du critère $K = Ge(\theta) + Gr(\theta) — 40\log_{10}(D) + L_{ref}(alt_{ref}, D_{ref}) — L_{atmo}(h, D)$
            (tous les termes étant exprimés en dB) ;

        c. Fin

        d. Calcul du début et de la fin de la fauchée réellement exploitable pour cette valeur de $D_{pt}$, soit l'ensemble des distances D qui, pour cette valeur de $D_{pt}$, vérifient : $K(D) > K_{ref}$

    5. Fin

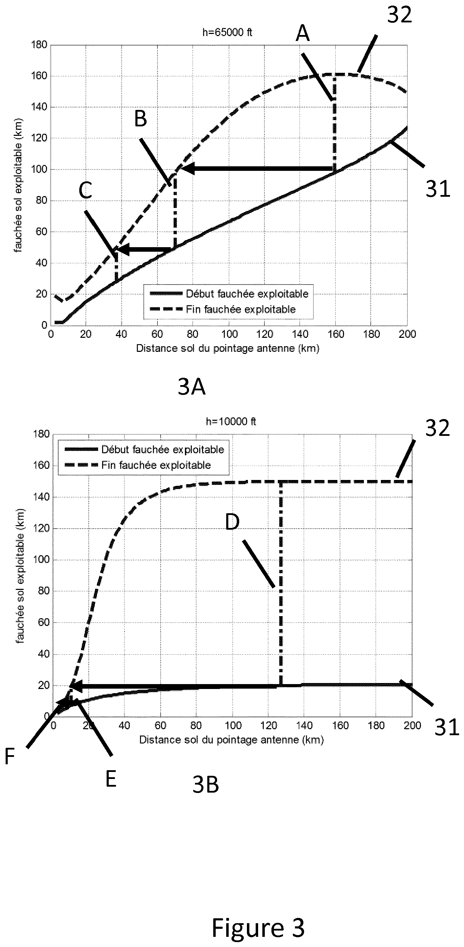

A l'aide de cet algorithme il est donc possible de calculer les fauchées réellement exploitable en fonction de la distance sol de pointage antenne. Ce calcul est réalisé par les moyens de traitement du système radar. Les figures 3A et 3B présentent les courbes obtenues à l'aide de l'algorithme pour un même mode radar et avec les paramètres suivant : $D_{ref}$ = 150km, $alt_{ref}$ = 10kft et $SER_{ref}$ = 100$m^2$ pour deux altitudes 10kft (3B) et 65kft (3A) respectivement. Dans deux graphes 3A et 3B, les courbes 31 représentent la distance minimale exploitable de la fauchée par le système radar 1 pour chaque hypothèse de distance de pointage $D_{pt}$. Les courbes 32 représentent la distance maximale exploitable de la fauchée pour chaque hypothèse de distance de pointage $D_{pt}$.

Grâce à ces courbes, il est possible d'optimiser le pointage d'antenne. Cette optimisation peut être réalisée par trois méthodes différentes.

Dans le mode de réalisation des figures 3A et 3B, l'optimisation est réalisée en mode « portée maximum ». Cela signifie que l'optimisation du pointage d'antenne est réalisée à partir d'un premier pointage donnant la portée maximum du système radar. Ce mode de fonctionnement permet par exemple d'éviter la détection, de respecter des distances de protection ou encore de minimiser les nuisances. Afin de faire fonctionner le système radar 1 avec une portée maximum, on recherche la distance de pointage qui donne la fin de fauchée exploitable la plus grande dans les figures 3A et 3B. On en déduit alors le début de fauchée et l'angle de site antenne associé permettant de pointer l'antenne. Les segments verticaux A et D dans les figures 3A et 3B respectivement, représentent chacun la première sous-fauchée du pointage donnant la fin de fauchée exploitable la plus grande. Pour définir le pointage suivant, on recherche alors la distance de pointage dont la fin de fauchée exploitable est égale au début de fauchée exploitable du premier pointage. Ceci permet de connaitre également le début de fauchée et l'angle de site de ce nouveau pointage. Les segments verticaux B et E pour la figure 3A et 3B respectivement, représentent chacun la sous-fauchée de ce second pointage donnant une sous-fauchée exploitable juxtaposée à la première sous-fauchée. Les flèches liants les segments A et B et D et E respectivement illustre comment passer du début de sous-fauchée exploitable du premier pointage à la fin de la sous-fauchée du deuxième pointage (et de même pour passer du deuxième au troisième).

En procédant de manière itérative, il est alors possible de déterminer le nombre minimal de pointage d'antenne (et les sites antennes associés) permettant de couvrir de manière continue une zone d'intérêt donnée et avec un minimum de recouvrement entre les sous-fauchées ou de déterminer la distance minimum couverte par le pointage lorsqu'on se limite à un nombre de pointage donné. Dans les figures 3A et 3B, les segments verticaux A, B, C et D, E, F respectivement représentent les sous-fauchées correspondant à ce mode de fonctionnement où le nombre de pointage est limité à trois. Dans la figure 3B à une altitude $h = 10kft$, on observe qu'un seul pointage $D_{pt}$ = 125km correspondant à une sous-fauchée exploitable de 130km (segment D) permet à lui seul de couvrir presque l'intégralité de la zone d'intérêt correspondant à D+E+F, les deux autres pointages apportent un intérêt limité, les deux sous-fauchées E et F étant de longueurs négligeables. Au contraire, dans la figure 3B à une altitude $h = 65000ft$, les trois pointages à $D_{pt}$ = 38km, 72km et 160km sont nécessaires pour couvrir la zone d'intérêt, aucune des trois sous-fauchées correspondantes (A, B, C respectivement) n'étant de longueur négligeable. On appelle les sous-fauchées A, B et B, C (respectivement D, E et E, F) des sous-fauchées adjacentes.

Dans un autre mode de réalisation, l'optimisation est réalisée en mode « distance minimale ». Ici, l'optimisation est réalisée de manière à ce que le premier pointage d'antenne donne une distance minimale couverte souhaitée par l'utilisateur, par exemple pour effectuer des missions de type escorte. Dans ce mode de réalisation, à partir du graphe des fauchées réellement exploitables en fonction du pointage antenne, on recherche la distance de pointage qui donne le début de sous-fauchée exploitable à la distance minimale souhaitée. On en déduit la fin de sous-fauchée exploitable pour ce pointage d'antenne, ce qui permet de déterminer le début de la prochaine sous-fauchée par la même méthode qu'expliquée précédemment en répétant ces étapes jusqu'à couvrir la zone d'intérêt souhaitée ou jusqu'à atteindre la limite du nombre de pointage d'antenne fixée.

Dans un autre mode de réalisation, l'optimisation est réalisée en mode « zone de recherche ». Dans ce mode de réalisation, ce n'est pas la portée maximale ou la distance minimale couverte qui est recherchée mais la couverture d'une zone fixe d'intérêt qui correspond à une distance maximum et une distance minimum. Dans ce mode de réalisation, la détermination des pointages d'antenne permettant de couvrir la zone d'intérêt est effectuée de manière similaire au cas où la portée est maximale à l'exception près qu'on commence par chercher la distance de pointage donnant la fin de fauchée exploitable à la distance maximum au lieu de chercher la distance de pointage donnant la fin de fauchée exploitable la plus grande. On s'arrête lorsqu'on obtient la distance de pointage qui donne le début de sous-fauchée égale à la distance minimum de la zone fixe d'intérêt. Alternativement, on peut réaliser la couverture de la zone d'intérêt comme dans le cas où l'on souhaite privilégier la distance minimale couverte en remplaçant la distance minimum souhaitée par la distance minimum.

Grâce à l'utilisation de l'algorithme permettant de calculer les sous-fauchées réellement exploitables en fonction de toutes les distances de pointage possibles et grâce à un des modes d'optimisation de pointage d'antenne, il est possible de maitriser la position des sous-fauchées réellement exploitables par le système radar en terme de détection tout en s'assurant de la continuité de détection entre les sous-fauchées avec un recouvrement minimal. Par recouvrement minimal on entend que la distance entre le début d'une sous fauchée (respectivement la fin d'une sous-fauchée) d'un pointage et la fin d'une sous fauchée adjacente (respectivement le début d'une sous fauchée adjacente) est inférieure à quelques kilomètres

Le domaine d'intérêt à surveiller par le système radar peut être modifié de manière dynamique par un utilisateur. Aussi, le choix des pointages optimisés est adapté en temps réel pour couvrir sans discontinuité et avec un recouvrement minimal la zone d'intérêt sélectionnée dynamiquement par un utilisateur.

Dans un mode de réalisation de l'invention, les sous-fauchées réellement exploitables en fonction de toutes les distances de pointage possibles sont calculées de manière dynamique et automatique en fonction de l'altitude du porteur du système radar par les moyens de traitement. Le choix des pointages optimisé pour une zone d'intérêt fixée, déterminé à partir des courbes des sous-fauchées, est donc ajusté de manière automatique en fonction de l'altitude.

Dans certains cas, notamment en recherche maritime, plusieurs types de cibles sont susceptibles d'être intéressantes à rechercher par le système radar. Il peut s'avérer que ces cibles possèdent une *SER* différentes de la $SER_{ref}$ utilisée pour l'optimisation précédente. Si les autres cibles possèdent une $SER_{ref2}$ inférieure à $SER_{ref}$ le choix des pointages effectués précédemment n'est plus optimal en conservant les mêmes distances de pointage car la continuité de détection dans la zone d'intérêt n'est plus garantie. A l'inverse, si les autres cibles possèdent une $SER_{ref2}$ supérieure à $SER_{ref}$ la totalité de la capacité de portée du radar n'est pas exploitée. Afin de tenir compte des différents types de cibles, il suffit de recalculer la portée de référence $D_{ref2}$ du radar et les pertes atmosphériques $L_{ref2}$ par un calcul itératif basé sur l'équation radar avec $SER = SER_{ref2}$ puis d'utiliser ces valeurs dans l'algorithme permettant de calculer les nouvelles sous-fauchée exploitables en réception.

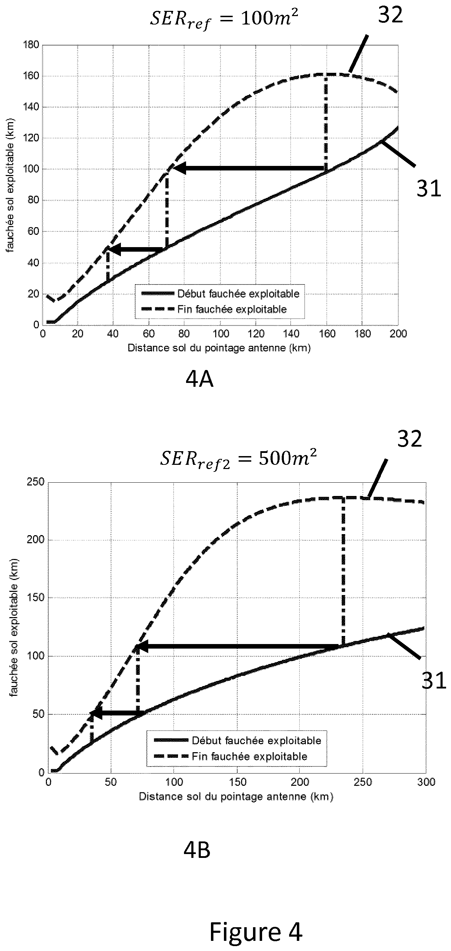

Les figures 4A et 4B présentent les résultats de l'algorithme de calcul des sous-fauchées exploitables en réception de l'invention pour deux types différents de cibles et avec un même mode radar. La figure 4A est obtenue avec les mêmes paramètres que la figure 3A : la portée de référence $D_{ref}$ = 150km est obtenue pour des cibles $SER_{ref}$ = $100m^2$ à une altitude de référence $alt_{ref}$ = 65kft. On obtient les courbes de la figure 4B grâce à l'algorithme en calculant $D_{ref2}$ et $L_{ref2}$ pour des cibles de $SER_{ref2}$ = $500m^2$. Dans la figure 4B, les courbes de fin et de début de fauchée calculées pour un même mode radar mais pour des cibles de *SER* différente de celles de 4A, donnent lieu à une nouvelle optimisation des pointages d'antenne.

Ainsi, dans un mode de réalisation, le choix des pointages est adapté en fonction du type des cibles recherchées et de la *SER* associée, valeur que l'opérateur peut ajuster dynamiquement.

Le système radar 1 de la figure 2 possède un balayage mécanique en azimut. Cependant, dans un autre mode de réalisation le système radar possède un balayage électronique en azimut. Dans ce cas, il suffit dans l'algorithme de prendre en compte la diminution en gain de l'antenne en fonction des directions du pointage électronique de l'antenne ainsi que l'élargissement du faisceau en élévation $\theta_{3dB}$.

Afin de privilégier la détection à distances courtes, intermédiaires ou longues, il peut être souhaitable d'utiliser des formes d'ondes radars et/ou des diagrammes d'antennes différents. Cependant, la portée de référence étant différente pour chaque diagramme d'antenne et chaque forme d'onde, les sous-fauchées réellement exploitables déterminées par l'algorithme sont elles aussi différentes. Aussi, dans un mode de réalisation de l'invention, le choix des pointages est adapté en fonction de la forme d'onde radar et/ou du diagramme antenne, paramètres sélectionnés dynamiquement par l'utilisateur, ou automatiquement par le radar en fonction de la zone de recherche ou de la SER choisie par l'opérateur.

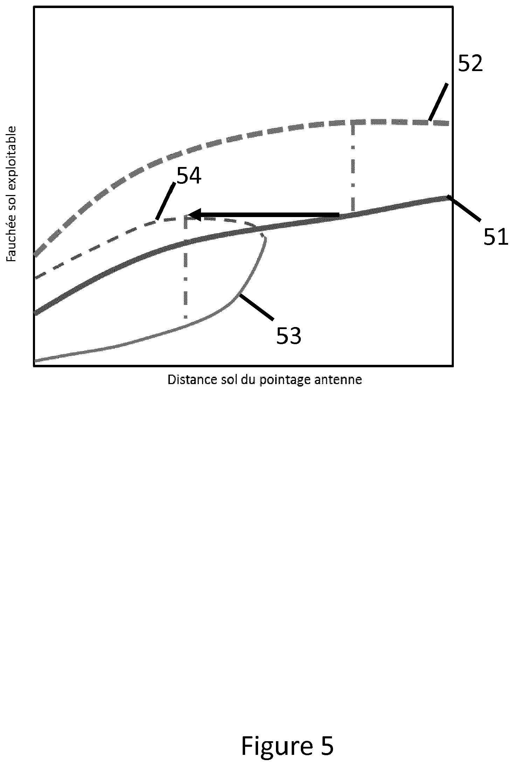

La figure 5 illustre un exemple d'optimisation de pointage d'antenne utilisant deux formes d'onde. Avec l'algorithme et en utilisant les mêmes paramètres ($D_{ref}$, $L_{ref}$, $alt_{ref}$, $SER_{ref}$ et $h$) on calcule les débuts et fins de fauchée exploitables pour chacune de deux formes d'onde (F01 et F02). On obtient alors les courbes de fin de sous-fauchées exploitables 52 et 54 et les courbes de début de sous-fauchée exploitables 51 et 53 pour la forme d'onde F01 et F02 respectivement. Selon le mode d'optimisation souhaité (portée maximum, distance couverte minimum, zone de recherche) on réalise l'optimisation du pointage d'antenne de la même manière qu'expliqué précédemment mais pour passer d'une distance de pointage à l'autre, au lieu de rester sur la même courbe de sous-fauchée, on utilise celle de l'autre forme d'onde.

Ainsi, dans le mode de réalisation de la figure 6, on fonctionne en mode portée maximum, la première distance de pointage donnant la fin de fauchée exploitable maximum est réalisée avec la forme d'onde FO1. Or, la seconde distance de pointage la moins éloignée de la première distance de pointage et dont la fin de fauchée exploitable est égale au début de fauchée exploitable du premier pointage est obtenue avec F02 et non pas F01. On va donc passer d'une forme d'onde à l'autre pour réaliser le pointage d'antenne optimal.

## Revendications

1. Procédé d'optimisation du pointage en élévation d'une antenne d'un système radar (1) aéroporté à une altitude h comprenant une antenne et des moyens de traitement et de calcul, le procédé comprenant :

        **a.** la sélection d'une zone d'intérêt (2)
        **b.** le calcul des pertes atmosphériques $L_{ref}$ à une altitude de référence $h_{ref}$ à la portée de référence $D_{ref}$ et le calcul d'un critère de référence

$$K_{ref} = -40 \log_{10}(D_{ref});$$

        **c.** pour chaque distance de pointage possible en élévation de l'antenne $D_{pt}$ de la zone d'intérêt, le calcul du site antenne $S$ permettant de viser la distance $D_{pt}$ par le centre de l'antenne;

**d.** pour chaque distance D du domaine d'intérêt, le calcul de l'angle $\theta$ sous lequel l'antenne observe le point du sol à la distance D et le calcul d'un critère ;

$$K(D) = G_e(\theta) + G_r(\theta) - 40 \log_{10} D + L_{ref}\big(h_{ref}, D_{ref}\big) - L_{atmo}(h, D)$$

Où $G_e(\theta)$, $G_r(\theta)$ sont respectivement les gains de l'antenne normalisés en émission et en réception, et avec $L_{atmo}$ les pertes atmosphériques à l'altitude h et à la distance D;

**e.** le calcul de l'ensemble des distances D qui, pour cette distance de pointage $D_{pt}$ vérifient la relation $K(D) > K_{ref}$ de manière à obtenir le début et la fin de la sous-fauchée réellement exploitable par le système radar ; et

**f.** calculer les sous-fauchés réellement exploitables à juxtaposer (A, B, C) pour couvrir la totalité de la zone d'intérêt sans discontinuités.

2. Procédé d'optimisation du pointage d'une antenne d'un système radar selon la revendication 1, dans lequel on répète les étapes b) à f) avec différentes valeurs de surface équivalentes radar $SER_{ref}$, ayant préalablement recalculé les nouvelles portées $D_{ref}$ correspondant à ces nouvelles $SER_{ref}$.

3. Procédé d'optimisation du pointage d'une antenne d'un système radar selon la revendication 1 à 2, dans lequel on répète les étapes b) à f) avec différentes formes d'onde radar.

4. Procédé d'optimisation du pointage d'une antenne d'un système radar selon la revendication 1 à 3, dans lequel on répète les étapes b) à f) pour différents diagrammes d'émission et de réception de l'antenne.

5. Procédé d'optimisation du pointage d'une antenne d'un système radar selon l'une quelconque des revendications précédentes, dans lequel on répète les étapes a) à f) pour différentes altitudes h du système radar aéroporté.

6. Système radar (1) aéroporté à une altitude h pour la mise en œuvre d'un procédé d'optimisation du pointage d'une antenne à balayage en azimut et en élévation dudit système radar, ledit système radar étant **caractérisé en ce qu'**il comprend des moyens de traitements configurés pour calculer une portée de référence $D_{ref}$ pour une surface équivalente radar $SER_{ref}$ donnée, calculer des pertes atmosphériques $L_{ref}$ à une altitude de référence $h_{ref}$ à la distance $D_{ref}$ et calculer un critère de référence $K_{ref}$ = -40log$_{10}(D_{ref})$ puis pour chaque distance de pointage possible de l'antenne $D_{pt}$ de la zone d'intérêt, calculer le site antenne $S$ permettant de viser la distance $D_{pt}$ par le centre de l'antenne puis pour chaque distance D du domaine d'intérêt calculer l'angle $\theta$ sous lequel l'antenne observe le point du sol à la distance D et de calculer un critère

$$K(D) = G_e(\theta) + G_r(\theta) - 40 \log_{10} D + L_{ref}\big(h_{ref}, D_{ref}\big) - L_{atmo}(h, D)$$

où $G_e(\theta)$, $G_r(\theta)$ sont respectivement les gains de l'antenne normalisés en émission et en réception, et avec $L_{atmo}$ les pertes atmosphériques à l'altitude h et à la distance D,

puis calculer l'ensemble des distances D qui, pour cette distance de pointage $D_{pt}$ vérifient la relation $K(D) > K_{ref}$ de manière à obtenir le début et la fin de la sous-fauchée réellement exploitable par le système radar et enfin répéter ces étapes de calculs pour toutes les distances de pointage $D_{pt}$ de la zone d'intérêt puis calculer les sous-fauchés réellement exploitables (A, B, C) à juxtaposer pour couvrir la totalité de la zone d'intérêt sans discontinuités, avec un minimum de recouvrement et avec un nombre minimal de pointage d'antenne en élévation.

7. Système radar aéroporté selon la revendication précédente, dans lequel les formes d'onde radar émises par l'antenne sont configurables.

8. Système radar aéroporté selon l'une quelconque des revendications 6 à 7, dans lequel les diagrammes d'émission et de réception sont configurables.

**Patentansprüche**

1. Optimierungsverfahren der Höhenpeilung einer Antenne eines luftgestützten Radarsystems (1) in einer Höhe h, umfassend eine Antenne und Mittel zur Verarbeitung und zur Berechnung, wobei das Verfahren Folgendes umfasst:

a. die Auswahl eines Bereichs von Interesse (2)

b. die Berechnung der atmosphärischen Verluste $L_{ref}$ in einer Referenzhöhe $h_{ref}$ bei der Referenzreichweite $D_{ref}$ und die Berechnung eines Referenzkriteriums

$$K_{ref} = -40 \log_{10}(D_{ref});$$

c. für jeden möglichen Höhen-Peilabstand der Antenne $D_{pt}$ des Bereichs von Interesse, die Berechnung der Antennenhöhe $S$, welche das Anpeilen des Abstandes $D_{pt}$ durch den Mittelpunkt der Antenne ermöglicht;

d. für jeden Abstand D des Bereichs von Interesse, die Berechnung des Winkels $\theta$, in welchem die Antenne den Punkt am Boden in dem Abstand D beobachtet und die Berechnung eines Kriteriums;

$$K(D) = G_e(\theta) + G_r(\theta) - 40 \log_{10} D + L_{ref}(h_{ref}, D_{ref}) - L_{atmo}(h, D)$$

wobei $G_e(\theta)$, $Gr(\theta)$ jeweils die im Sende- und im Empfangsbetrieb normalisierten Verstärkungen der Antenne sind, und wobei $L_{atmo}$ die atmosphärischen Verluste in der Höhe $h$ und in dem Abstand D sind;

e. die Berechnung sämtlicher Abstände D, welche, für diesen Peilungsabstand $D_{pt}$ die Beziehung $K(D) > K_{ref}$ dergestalt verifizieren, dass man den Anfang und das Ende des tatsächlich durch das Radarsystem auswertbaren Teilbandes erzielt; und

f. die Berechnung der tatsächlich auswertbaren, aneinanderzureihenden (A, B, C) Teilbänder zur Abdeckung des gesamten Bereichs von Interesse ohne Diskontinuitäten.

2. Optimierungsverfahren der Peilung einer Antenne eines Radarsystems nach Anspruch 1, wobei man die Schritte b) bis f) mit unterschiedlichen Radar-Äquivalenzflächenwerten $SER_{ref}$ wiederholt, nachdem man zuvor die neuen Reichweiten $D_{ref}$ berechnet hat, welche diesen neuen $SER_{ref}$ entsprechen.

3. Optimierungsverfahren der Peilung einer Antenne eines Radarsystems nach Anspruch 1 bis 2, wobei man die Schritte b) bis f) mit unterschiedlichen Radarwellenformen wiederholt.

4. Optimierungsverfahren der Peilung einer Antenne eines Radarsystems nach Anspruch 1 bis 3, wobei man die Schritte b) bis f) für unterschiedliche Sende- und Empfangsdiagramme der Antenne wiederholt.

5. Optimierungsverfahren der Peilung einer Antenne eines Radarsystems nach einem der vorhergehenden Ansprüche, wobei man die Schritte b) bis f) mit unterschiedlichen Höhen $h$ des luftgestützten Radarsystems wiederholt.

6. Luftgestütztes Radarsystem (1) in einer Höhe $h$ zur Umsetzung eines Optimierungsverfahrens der Peilung einer Antenne mit Azimut- und Höhenabtastung des Radarsystems, wobei das Radarsystem **dadurch gekennzeichnet ist, dass** es Verarbeitungsmittel umfasst, welche konfiguriert sind, um eine Referenzreichweite $D_{ref}$ für eine gegebene Radar-Äquivalenzfläche $SER_{ref}$ zu berechnen, atmosphärische Verluste $L_{ref}$ in einer Referenzhöhe $h_{ref}$ in einem Abstand $D_{ref}$ zu berechnen und ein Referenzkriterium $K_{ref} = -40 \log_{10}(D_{ref})$ zu berechnen, und anschließend, für jeden möglichen Peilabstand der Antenne $D_{pt}$ des Bereichs von Interesse, die Antennenhöhe $S$ zu berechnen, welche das Anpeilen des Abstandes $D_{pt}$ durch den Mittelpunkt der Antenne ermöglicht, und anschließend für jeden Abstand D des Bereichs von Interesse, den Winkel $\theta$ zu berechnen, in welchem die Antenne den Punkt am Boden in dem Abstand D beobachtet und ein Kriterium zu berechnen:

$$K(D) = G_e(\theta) + G_r(\theta) - 40 \log_{10} D + L_{ref}(h_{ref}, D_{ref}) - L_{atmo}(h, D)$$

wobei $G_e(\theta)$, $Gr(\theta)$ jeweils die im Sende- und im Empfangsbetrieb normalisierten Verstärkungen der Antenne sind, und wobei $L_{atmo}$ die atmosphärischen Verluste in der Höhe $h$ und in dem Abstand D sind, und anschließend, Berechnen sämtlicher Abstände D, welche, für diesen Peilungsabstand $D_{pt}$ die Beziehung $K(D) > K_{ref}$ dergestalt verifizieren, dass man den Anfang und das Ende des tatsächlich durch das Radarsystem auswertbaren Teilbandes erzielt, und abschließend, Wiederholen dieser Berechnungsschritte für sämtliche Peilungsabstände $D_{pt}$ des Bereichs von Interesse, und anschließend Berechnen der tatsächlich auswertbaren, aneinanderzureihenden Teilbänder (A, B, C), zur Abdeckung des gesamten Bereichs von Interesse ohne Diskontinuitäten, mit einem Minimum an Überlappung und mit einer Mindestanzahl an Antennen-Höhenpeilungen.

**7.** Luftgestütztes Radarsystem nach dem vorhergehenden Anspruch, wobei die durch die Antenne ausgesandten Radarwellenformen konfigurierbar sind.

**8.** Luftgestütztes Radarsystem nach einem der Ansprüche 6 bis 7, wobei die Sende- und Empfangsdiagramme konfigurierbar sind.

**Claims**

**1.** A method for optimizing the elevation pointing of an antenna of an airborne radar system (1) at an altitude h comprising an antenna and processing and calculation means, the method comprising:

> a. selecting an area of interest (2)
> b. calculating atmospheric losses $L_{ref}$ at a reference altitude $h_{ref}$ at the reference range $D_{ref}$ and calculating a reference criterion $K_{ref} = -40 \log_{10}(D_{ref})$;
> c. for each possible elevation pointing distance of the antenna $D_{pt}$ of the area of interest, calculating the antenna elevation $S$ that makes it possible to target the distance $D_{pt}$ via the centre of the antenna;
> d. for each distance D of the region of interest, calculating the angle $\theta$ at which the antenna observes the point of the ground at the distance D and calculating a criterion;

$$K(D) = G_e(\theta) + G_r(\theta) - 40\log_{10} D + L_{ref}\big(h_{ref}, D_{ref}\big) - L_{atmo}(h, D)$$

> where $G_g(\theta)$, $G_r(\theta)$ are respectively the gains of the antenna that are normalized at emission and at reception, and with $L_{atmo}$ being the atmospheric losses at the altitude $h$ and at the distance D;
> e. calculating all of the distances $D$ that, for this pointing distance $D_{pt}$, verify the relationship $K(D) > K_{ref}$ so as to obtain the start and the end of the sub-swath actually usable by the radar system; and
> f. calculating the actually usable sub-swaths that are to be juxtaposed (A, B, C) in order to cover the whole of the area of interest without discontinuities.

**2.** The method for optimizing the pointing of an antenna of a radar system according to claim 1, wherein steps b) to f) are repeated with various radar equivalent surface values $SER_{ref}$, having recalculated the new ranges $D_{ref}$ corresponding to these new $SER_{ref}$ beforehand.

**3.** The method for optimizing the pointing of an antenna of a radar system according to claim 1 to 2, wherein steps b) to f) are repeated with various radar waveforms.

**4.** The method for optimizing the pointing of an antenna of a radar system according to claim 1 to 3, wherein steps b) to f) are repeated for various emission and reception diagrams of the antenna.

**5.** The method for optimizing the pointing of an antenna of a radar system according to any one of the preceding claims, wherein steps a) to f) are repeated for various altitudes $h$ of the airborne radar system.

**6.** An airborne radar system (1) at an altitude h for implementing a method for optimizing the pointing of an azimuthal and elevation scanning antenna of said radar system, said radar system being **characterized in that** it comprises processing means configured to calculate a reference range $D_{ref}$ for a given radar equivalent surface $SER_{ref}$, calculate atmospheric losses $L_{ref}$ at a reference altitude $h_{ref}$ at the distance $D_{ref}$ and calculate a reference criterion $K_{ref} = -40 \log_{10}(D_{ref})$ and then, for each possible pointing distance of the antenna $D_{pt}$ of the area of interest, calculate the antenna elevation $S$ that makes it possible to target the distance $D_{pt}$ via the centre of the antenna and then, for each distance D of the region of interest, calculate the angle $\theta$ at which the antenna observes the point of the ground at the distance D and to calculate a criterion

$$K(D) = G_e(\theta) + G_r(\theta) - 40\log_{10} D + L_{ref}\big(h_{ref}, D_{ref}\big) - L_{atmo}(h, D)$$

where $G_g(\theta)$, $G_r(\theta)$ are respectively the gains of the antenna that are normalized at emission and at reception, and with $L_{atmo}$ being the atmospheric losses at the altitude $h$ and at the distance D;
and then calculate all of the distances $D$ that, for this pointing distance $D_{pt}$, verify the relationship $K(D) > K_{ref}$ so as to obtain the start and the end of the sub-swath actually usable by the radar system, and lastly repeat these calculation steps for all of the pointing distances $D_{pt}$ of the area of interest, and then calculate the actually usable sub-swaths (A, B, C) that are to be juxtaposed in order to cover the whole of the area of interest without discontinuities, with minimum overlap and with a minimum number of elevation antenna pointing operations.

7. The airborne radar system according to the preceding claim, wherein the radar waveforms emitted by the antenna can be configured.

8. The airborne radar system according to any one of claims 6 to 7, wherein the emission and reception diagrams can be configured.

Figure 1

Figure 2

3A

3B

Figure 3

4A

4B

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 06841083 B
- US 5488381 A
- FR 3027408
- FR 2900736 A1